# EUROPÄISCHE PATENTSCHRIFT

(11) **EP 0 953 739 B1**
(45) Veröffentlichungstag und Bekanntmachung des Hinweises auf die Patenterteilung: **18.08.2004**
(21) Anmeldenummer: 99108165.4
(22) Anmeldetag: 26.04.1999
(51) Int. Cl.: F01N 3/20, B01D 53/94

(54) **Verfahren und Vorrichtung zur Abgasnachbehandlung für eine mit einem SCR-Katalsator ausgestattete Brennkraftmaschine**
Exhaust gas treating process and device for an internal combustion engine equipped with a SCR-catalytic converter
Procédé et dispositif de traitement des gaz d'échappement d'un moteur à combustion interne équipé d'un catalyseur SCR

(30) Priorität: 30.04.1998 DE 19819579
(43) Veröffentlichungstag der Anmeldung: 03.11.1999
(73) Patentinhaber: Argillon GmbH, 96257 Redwitz (DE)
(72) Erfinder: Weigl, Manfred, 93161 Viehhausen (DE)
(74) Vertreter: Tergau & Pohl Patentanwälte

(56) Entgegenhaltungen:
- DE-A- 4 203 807
- DE-A- 4 404 617
- DE-U- 29 708 591
- US-A- 5 651 247
- US-A- 5 709 080

## Beschreibung

Die Erfindung betrifft ein Verfahren und eine Vorrichtung zur Abgasnachbehandlung für eine mit einem SCR-Katalysator ausgestattete Brennkraftmaschine gemäß den Oberbegriffen der unabhängigen Patentansprüche 1 und 11.

Die Verminderung der Stickoxidemission einer mit Luftüberschuß arbeitenden Brennkraftmaschine, insbesondere einer Diesel-Brennkraftmaschine, kann mit Hilfe der Selektiv-Catalytic-Reduction-Technologie (SCR) zu Luftstickstoff (N₂) und Wasserdampf (H₂O) erfolgen. Als Reduktionsmittel werden entweder gasförmiges Ammoniak (NH₃), Ammoniak in wässeriger Lösung oder Harnstoff in wässeriger Lösung eingesetzt. Der Harnstoff dient dabei als Ammoniakträger und wird mit Hilfe eines Dosiersystems vor einem Hydrolysekatalysator in das Auspuffsystem eingespritzt, dort mittels Hydrolyse zu Ammoniak umgewandelt, der dann wiederum in dem eigentlichen SCR- oder DENOX-Katalysator die Stickoxide reduziert.

In bekannten Dosiersystemen erzeugen Pumpen den benötigten Einspritzdruck, wobei der Druck von einem Druckregler konstant gehalten wird. Zur Dosierung des Reduktionsmittels werden elektromagnetisch betätigte Ventile, wie sie für die Kraftstoffeinspritzung bekannt sind, eingesetzt. Die zu dosierenden Mengen an Reduktionsmittel pro Fahrstrecke entsprechen einigen Prozent der jeweiligen Kraftstoffmenge, d. h. die von der Pumpe zu fördernden Mengen sind relativ gering. Bei bekannten Dosiersystemen fördert die elektrisch angetriebene Pumpe das Reduktionsmittel über einen Druckregler im Kreis. Es wird mittels dieser Pumpen für den erforderlichen Druckbereich das Vielfache der benötigten Menge an Redukti onsmittel gefördert und die verfügbaren Druckregler benötigen für eine spezifikationsgemäße Funktion Fördermengen, die ein Vielfaches der Dosiermenge betragen. Der Druckregler begrenzt den Druck auf einen konstanten Wert, so daß über eine, von einer Steuereinrichtung vorgegebene Ventilöffnungszeit die Dosiermenge gesteuert werden kann. Solch ein Reduktionsmittelkreislauf hat den Nachteil, daß die kontinuierlich laufende Pumpe unnötig viel Antriebsenergie verbraucht und auf hohe Lebensdauer ausgelegt werden muß.

Außerdem ist in solchen Harnstoff SCR-Systemen eine Überwachung der dosierten Reduktionsmittelmengen notwendig, da einerseits die verfügbaren Gassensoren zu ungenau sind, um Fehldosierungen zuverlässig zu erkennen und andererseits die Speicherfähigkeit des Katalysators die Detektion eines Dosierfehlers allein über die Abgasmessung verzögern würde. Bei einer kontinuierlich laufenden Pumpe, welche über einen Druckregler einen konstanten Druck bereitstellt, kann die dosierte Menge nicht gemessen werden, da die Durchflußmenge durch den Druckregler zurück in den Vorratsbehälter für das Reduktionsmittel ein Vielfaches der Dosiermenge beträgt. Ein weiteres Problem bei solchen Dosiereinrichtungen besteht darin, daß die Dosiergenauigkeit der verfügbaren kostengünstigen Magnetventile zu kleinen Ansteuerzeiten hin soweit abnimmt, daß in bestimmten Betriebszuständen nicht ausreichend fein dosiert werden kann. Eine solche Dosiereinrichtung ist z.B. in US 5,709,080 A beschrieben.

Aus DE 297 08 591 U1 ist eine Vorrichtung zum Zuführen von Ammoniak in den Abgasstrom eines Verbrennungsmotors bekannt, bei der als Ammoniakquelle ein beheizbarer druckfester Konverter vorgesehen ist, in welchem sich ein thermolytisch ammoniakabspaltender Stoff oder ein thermolytisch ammoniakabspaltendes Stoffgemisch befindet. Der Dosiervorrichtung für das Ammoniak ist ein Ammoniakspeicher zum Zwischenspeichern von aus dem Stoff durch Wärmezufuhr abgespaltetem Ammoniak vorgeschaltet. Die Dosiervorrichtung wird mit Steuersignalen einer motorbetriebskenndatenverarbeitenden, daraus den NOx-Ausstoß bestimmenden Steuereinheit beaufschlagt.

Der Erfindung liegt die Aufgabe zugrunde, ein Verfahren und eine Vorrichtung zur Abgasnachbehandlung für eine mit einem SCR-Katalysator ausgestattete Brennkraftmaschine der eingangs genannten Art anzugeben, mit deren Hilfe auch kleine Mengen an Reduktionsmittel dosiert werden können und zugleich die Möglichkeit gegeben ist, das Dosiersystem hinsichtlich ihrer Funktionsbereitschaft zu überprüfen.

Diese Aufgabe wird durch die Merkmale der Patentansprüche 1 und 11 gelöst. Vorteilhafte Ausgestaltungen ergeben sich aus den Unteransprüchen.

Das erfindungsgemäße System besteht aus den Hauptkomponenten Steuergerät, Pumpe, Druckspeicher, Drucksensor und Dosierventil. Die Pumpe wird vom Steuerrechner eingeschaltet und befördert Reduktionsmittel in einen Druckspeicher. Durch Öffnen des Dosierventils kann Reduktionsmittel in den Abgastrakt der Brennkraftmaschine eingespritzt werden. Erfindungsgemäß fördert hier die Pumpe nur soviel Reduktionsmittellösung, wie für die Abgasnachbehandlung verbraucht wird. Daraus ergeben sich zum einen sehr kurze Pumpenansteuerzeiten, was die thermische Auslegung des Pumpenmotors erheblich vereinfacht und andererseits ergeben sich niedrige Gesamteinschaltzeiten, d. h. reduzierte Anforderungen an die Dauerhaltbarkeit. Zusätzlich zu den Einsparungen in der Pumpenkonstruktion wird das Systemgewicht auch durch Fortfall des Druckreglers reduziert und der elektrische Leistungsbedarf gesenkt.

Aus dem Druckabfall während und nach einer Dosierphase kann die dosierte Reduktionsmittelmenge ermittelt werden. Ungenauigkeiten in der Ventilansteuerung oder im Ventildurchsatz gehen deshalb nicht in die Dosiergenauigkeit ein. Wird ein vorgegebener Mindestdruck unterschritten, wird die Pumpe erneut gestartet und der Druck wieder aufgebaut. Die dosierte Reduktionsmittelmenge kann in vorteilhafter Weise, falls entsprechende Sensorik vorhanden ist, auch aus dem Hub einer Druckspeichermembran oder der Anzahl der Hübe mit vorgegebenem Volumen ermittelt werden.

Aufgrund der Speicherfähigkeit des Reduktionsmittels im SCR-Katalysator kann während der Druckaufbauphase auf Dosierimpulse verzichtet werden, um die Genauigkeit der Mengenberechnung für das Reduktionsmittel nicht zu beeinträchtigen. Durch diese Pump- und Dosierstrategie kann ohne zusätzliche Sensorik eine ausreichend genaue Reduktionsmitteldosierung erreicht werden.

Da die dosierte Reduktionsmittelmenge über den Druckspeicher ermittelt wird, kann das Dosierventil mit sehr kurzen Ansteuerimpulsen und hoher Frequenz betrieben werden, ohne daß Nachteile in der Genauigkeit der Dosierung auftreten.

Das erfindungsgemäße System bietet auch weitgehende Eigendiagnosemöglichkeiten. Durch Messung der Druckspeicher-Ladezeit oder der Druckanstiegsgeschwindigkeit können Veränderungen in der Pumpencharakteristik detektiert werden. In der Dosierphase können durch Vergleich der aufsummierten Ventilansteuerzeiten mit der Druckabnahme oder der Druckspeicherhübe Veränderungen in der Ventilfunktion detektiert werden. Durch Prüfung von Lade- und Entladezeit können Fehler in der Druckspeicherfunktion erkannt werden. Fehler dieser Art sind einerseits Veränderungen der Federkonstante durch Federbruch bei federbelasteten Membranen oder Kolben oder anderseits Gasverlust, falls eine durch ein Gasvolumen abgestützte Membran verwendet wird. Außerdem können Speicherkapazitätsänderungen durch Verformung der Membran oder durch blockierten Kolben detektiert werden. Wird weder die Pumpe noch das Dosierventil angesteuert, muß der Druck im System konstant bleiben. Ein Druckabfall zeigt eine Undichtigkeit im System an. Die aufgetretenen Fehler können in einen Fehlerspeicher abgelegt werden und/ oder dem Fahrer akustisch oder optisch angezeigt werden.

Das System läßt ohne Einbußen in der Dosiergenauigkeit, die Wahl des Einspritzdruckniveaus zu. Für eine optimale Verteilung des Reduktionsmittels im Abgas kann das Spritzbild des Dosierventils durch Variation des Druckes den Motorbetriebszuständen (Drehzahl, Last, Abgasgegendruck) angepaßt werden.

Mit dem erfindungsgemäßen System wird die Dosiermenge nicht mehr über die Ventilöffnungszeit definiert, sondern über den Druckverlauf oder der Anzahl oder Größe der Druckspeicherhübe. Dabei wird genutzt, daß beim Harnstoff-SCR-System nicht die Menge pro Dosierimpuls, sondern nur der integrale Verlauf exakt sein muß. Die Dosierimpulse müssen, im Gegensatz zur Kraftstoffdosierung nicht kurbelwellensynchron erfolgen, d. h. die Speicherladephase in der nicht dosiert werden sollte, z.B. wegen Genauigkeitseinbußen, stellt keine Einschränkung der Systemfunktionalität dar.

Zwei Ausführungsbeispiele der Erfindung sind im folgenden unter Bezugnahme auf die beiden Figuren näher erläutert. Es zeigt
- Figur 1:: ein erstes Ausführungsbeispiel eines NOx-Reduktionssystems mit einem Druckspeicher und einer separaten Pumpe und
- Figur 2:: ein Ausführungsbeispiel, bei dem Druckspeicher und Pumpe zu einer Baueinheit integriert sind.

Die in den beiden Figuren dargestellten Blockschaltbilder der NOx-Reduktionssysteme zeigen jeweils nur die für das Verständnis der Erfindung notwendigen Komponenten. Insbesondere ist in beiden Fällen beim Reduktionsmittelbehälter die Heizungseinrichtung mit zugehöriger Temperatursensorik, sowie die Einrichtung zur Füllstandsmesssung weggelassen.

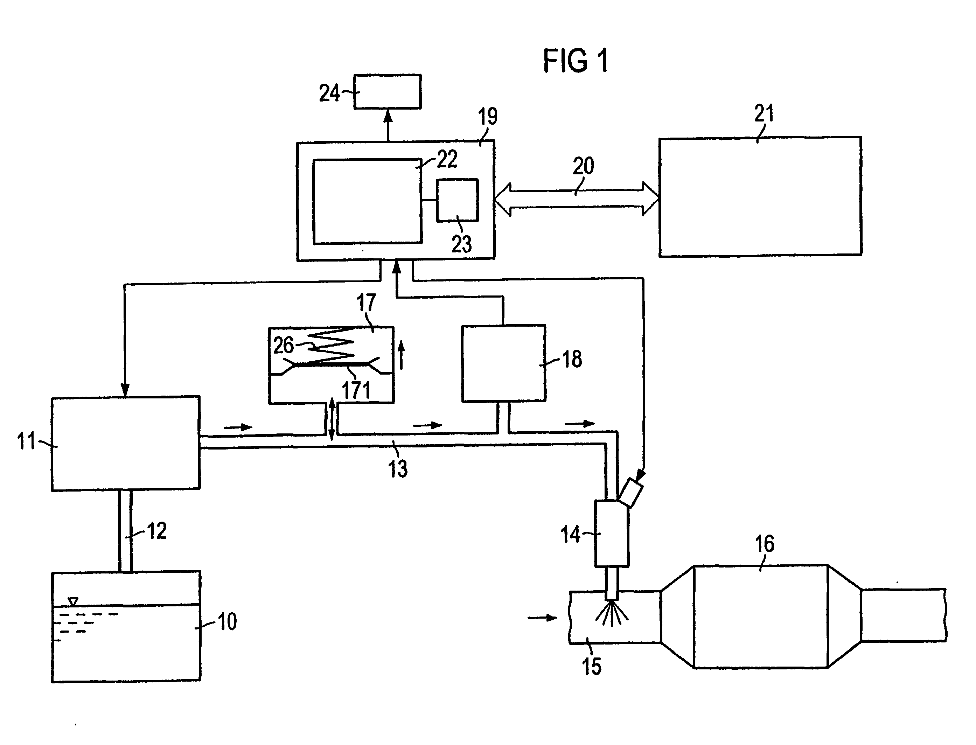

In Figur 1 ist mit dem Bezugszeichen 10 ein Reduktionsmittelbehälter bezeichnet, aus dem mittels einer elektrisch angetriebenen Reduktionsmittelpumpe, im folgenden vereinfacht als Pumpe 11 bezeichnet, Reduktionsmittel, beispielsweise in Wasser gelöster Harnstoff, gefördert wird. Hierzu ist die Saugseite der Pumpe 11 über eine Förderleitung 12 mit dem Reduktionsmittelbehälter 10 verbunden. Von der Druckseite der Pumpe 11 führt eine Zufuhrleitung 13 zu einem Dosierventil 14, das in einer Abgasleitung 15 in Strömungsrichtung des Abgases (Pfeilsymbol) vor einem SCR-Katalysator 16 derart angeordnet ist, daß dessen Düsenöffnung in die Abgasleitung 15 ragt.

In die Zufuhrleitung 13 ist ein Druckspeicher 17 eingefügt, der beispielsweise eine federbelastete Membran 171 aufweist. Desweiteren ist in der Zufuhrleitung 13 in Förderrichtung des Reduktionsmittels gesehen, stromabwärts des Druckspeichers 17 ein Drucksensor 18 angeordnet. Der Drucksensor 18, die Pumpe 11 und das Dosierventil 14 sind jeweils über nicht näher bezeichnete elektrische Leitungen mit einem Steuergerät 19 verbunden, das die Zugabe des Reduktionsmittels in den Abgastrakt 15 steuert. Hierzu weist das Steuergerät 19 eine elektronische Recheneinheit 22 auf, die auch Fehlererkenungsund Diagnoseroutinen durchführt.

Das Steuergerät 19 ist über eine serielle Schnittstelle 20 (z.B. CAN-BUS) mit einem Steuergerät 21 der Brennkraftmaschine und/oder mit weiteren Steuergeräten verbunden. Über diese Schnittstelle werden Daten, wie z.B. Drehzahl, Regelweg und Ladelufttemperatur dem Steuergerät 19 übertragen. Außerdem beinhaltet das Steuergerät 19 verschiedene Funktionsblöcke zum Ansteuern der Aktoren (Reduktionsmittelheizung, Pumpe) und zum Auswerten der von den Sensoren (Füllstandssensor, Temperatur des Reduktionsmittel, Druck im Druckspeicher bzw. in der Zufuhrleitung) gelieferten Signale. Hierzu weist das Steuergerät 19 u.a. einen Speicher 23 auf, in dem mehrere Kennlinien oder Kennfelder, sowie Schwellenwerte abgelegt sind, deren Bedeutung noch näher erklärt wird.

In diesem Ausführungsbeispiel bilden der Druckspeicher 17 und die Pumpe 11 getrennte Funktionseinheiten, die aber auch zusammen mit dem Drucksensor 18 zu einer einzigen Baugruppe zusammengefasst werden können, um die Kosten für Gehäuseteile und Leitungen zu senken und den Montageaufwand zu verringern.

Ebenso ist es möglich, die Funktionen des Steuergerätes 19 für das Reduktionsmitteldosiersystem in das Steuergerät 21 der Brennkraftmaschine zu integrieren.

Im folgenden wird die Funktion der Anordnung beschrieben. Nach Ansteuern der Pumpe 11 über entsprechende Ansteuersignale des Steuergerätes 19 wird Reduktionsmittel vom Reduktionsmittelbehälter 10 gefördert und in den Druckspeicher 17 und in die Zufuhrleitung 13 gepumpt. Die federbelastete Membran 171 des Druckspeichers 17 wird in der mit einem Pfeilsymbol gekennzeichneten Richtung entgegen der Kraft der Feder 26 ausgelenkt. Über den Drucksensor 18 wird der Druck gemessen und mit einem im Speicher 23 abgelegten oberen Schwellenwert verglichen. Überschreitet der aktuell gemessene Druckwert den vorgegebenen Schwellenwert (z.B. 2-5 bar), so wird die Pumpe 11 wieder ausgeschaltet. Sinkt aufgrund mehrerer, kurzer Einspritzimpulse für das Dosierventil 14 der Druck unter einen vorgegebenen unteren Schwellenwert, so wird die Pumpe 11 wieder eingeschaltet. Die benötigte Ansteuerzeit der Pumpe 11 wird gemessen, um Fehler (z.B: nachlassende Pumpleistung) im Drucksystem zu erkennen.

Sowohl der untere als auch der obere Schwellenwert für den Druck kann von der Recheneinheit 22 des Steuergerätes 19 frei vorgegeben, d.h. für den jeweiligen Zustand der Brennkraftmaschine oder der momentanen Abgastemperatur optimal eingestellt werden.

Die Bestimmung der dosierten Reduktionsmittelmenge kann in diesem Ausführungsbeispiel in vorteilhafter Weise über eine Kennlinie für das Druckspeichervolumen in Abhängigkeit vom Druck erfolgen. Hierzu wird der Druck mittels des Drucksensors 18 vor und nach einer Reihe von Dosierimpulsen gemessen.

Durch einfache Tabellenzugriffe kann dann die Volumendifferenz, d.h. die dosierte Menge an Reduktionsmittel bestimmt werden. Hierzu ist in dem Speicher 23 eine Kennlinie abgelegt, die den Zusammenhang zwischen Druck und Druckspeichervolumen wiedergibt. Eingangsgröße ist dabei der vom Drucksensor 18 erfasste Druck. Wenn im Speicher 23 des Steuergerätes 19 zusätzlich eine Kennlinie für den Ventildurchsatz des Dosierventils in Abhängigkeit des Druckes abgelegt ist, kann das Dosierventil auf korrekten Durchsatz geprüft werden. In Dosierpausen, wenn beispielsweise die Abgastemperatur zu gering ist und folgedessen keine Reduktionsmittelzugabe erfolgt, kann das System auf Dichtigkeit geprüft werden. Hierzu wird der Druck unmittelbar nach Beendigung eines Dosierimpulses erfasst und nach Ablauf einer bestimmten Zeitspanne überprüft, ob der Druck unter einen vorgegebenen Grenzwert abgefallen ist. Ist dies der Fall, so wird auf eine Undichtigkeit im Dosiersystem geschlossen. Dies kann in einer Leckage des Reduktionsmittelbehälters, der Leitungen oder des Druckspeichers begründet sein oder das Dosierventil schließt nicht mehr völlig, so daß ein Leckstrom vorliegt. Das Ergebnis der Diagnose kann dem Führer des mit der Brennkraftmaschine ausgestatten Kraftfahrzeuges akustisch und/oder optisch mittels einer Anzeigevorrrichtung 24 angezeigt werden, die von entsprechenden Signalen des Steuergerätes 19 aktiviert wird. Außerdem besteht die Möglichkeit, den Fehler in einen Fehlerspeicher einzutragen und/oder Eingriffe in die Steuerungsroutinen der Brennkraftmaschine vorzunehmen, so daß die Emissionen auch im Fehlerfall unter einem Grenzwert bleiben.

In einer vereinfachten Ausführungsform kann der in der Figur 1 als separate Komponente dargestellte Druckspeicher 17 als flexible Leitung, insbesondere in Form eines Schlauches realisiert sein, der die Druckseite der Pumpe 11 mit dem Dosierventil 14 verbindet.

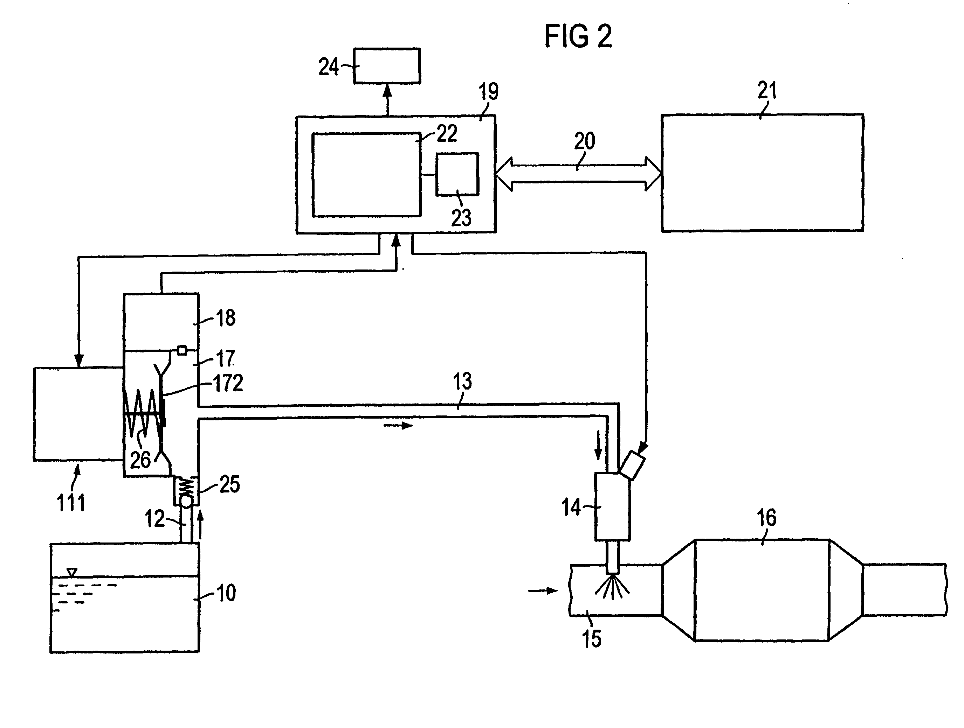

Die Figur 2 zeigt ein weiteres Ausführungsbeispiel des erfindungsgemäßen Systems, bei dem Druckspeicher und Pumpe integriert sind.

Mit dem Bezugszeichen 10 ist wieder ein Reduktionsmittelbehälter bezeichnet, aus dem mittels einer elektrisch angetriebener Membranpumpe 111 Reduktionsmittel, beispielsweise in Wasser gelöster Harnstoff, gefördert wird. Hierzu ist die Membranpumpe 111 über eine Förderleitung 12 mit dem Reduktionsmittelbehälter 10 verbunden. Am Anschluß der Förderleitung 12 der Membranpumpe 111 ist ein Rückschlagventil 25 vorgesehen, welches das Reduktionsmittel nur in der mit einem Pfeilsymbol eingezeichneten Richtung zu einem, direkt mit der Membranpumpe verbundenen Druckspeicher durchläßt. In die Membranpumpe 111 ist zugleich der Drucksensor 18 integriert und mißt so den Druck im Druckspeicher 17. Vom Druckspeicher 17 führt eine Zufuhrleitung 13 zu einem Dosierventil 14, das in einer Abgasleitung 15 in Strömungsrichtung des Abgases (Pfeil-symbol) vor einem SCR-Katalysator 16 derart angeordnet ist, daß dessen Düsenöffnung in die Abgasleitung 15 ragt.

Der Drucksensor 18, der Antrieb der Membranpumpe 111 und das Dosierventil 14 sind jeweils über nicht näher bezeichnete elektrische Leitungen mit einem Steuergerät 19 verbunden, das die Zugabe des Reduktionsmittels in den Abgastrakt 15 steuert. Hierzu weist das Steuergerät 19 eine elektronische Recheneinheit 22 auf, die auch Fehlererkenungs- und Diagnoseroutinen durchführt.

Das Steuergerät 19 ist über eine serielle Schnittstelle 20 (z.B. CAN-BUS) mit einem Steuergerät 21 der Brennkraftmaschine und/oder mit weiteren Steuergeräten verbunden. Über diese Schnittstelle werden Daten, wie z.B. Drehzahl, Regelweg und Ladelufttemperatur dem Steuergerät 19 übertragen. Außerdem beinhaltet das Steuergerät 19 verschiedene Funktionsblöcke zum Ansteuern der Aktoren (Reduktionsmittelheizung, Pumpe) und zum Auswerten der von den Sensoren (Füllstandssensor, Temperatur des Reduktionsmittel, Druck im Druckspeicher bzw. in der Zufuhrleitung) gelieferten Signale. Hierzu weist das Steuergerät 19 u.a. einen Speicher 23 auf, in dem mehrere Kennlinien oder Kennfelder, sowie Schwellenwerte abgelegt sind, deren Bedeutung noch näher erklärt wird.

Bei diesem Ausführungsbeispiel mittels einer Membranpumpe ergibt sich die Möglichkeit, die Membran 172 sowohl für die Druckspeicher- als auch für die Pumpfunktion zu nutzen. Die Membran 172 wird von einer Feder 26 belastet, um den Systemdruck zu erzeugen. Für den Pumpvorgang wird die Membran vom Antrieb der Membranpumpe (elektrischer Motor) gegen die Kraft der Feder 26 ausgelenkt. Die Auslenkung der Membran 172 kann beispielsweise mittels eines mechanischen Hubsensors oder eines Schalters erfasst und als Information dem Steuergerät übertragen werden. Die Auslenkung wird mit einem, im Speicher 23 abgelegten, vorgegebenen Wert verglichen und sobald dieser Wert für die Auslenkung erreicht ist, wird durch die Federkraft der Membran 172 ein Druck aufgebaut, der im wesentlichen von der Federcharakteristik, der Auslenkung und der Membranfläche bestimmt ist.

Wird nun das Dosierventil 14 über entsprechende Ansteuersignale vom Steuergerätes 19 angesteuert, so sinkt der Druck im System ab. Der Wert für den Druck im System wird mittels des Drucksensors 18 ständig gemessen und mit einem, im Speicher 23 des Steuergerätes abgelegten Minimaldruckwert verglichen. Als Ansteuersignale werden bevorzugt kurze Impulse verwendet, um eine Auskühlung des Katalysators zu vermeiden. Erreicht der Druck nach mehreren solchen Dosierimpulsen den vorgegebenen minimalen Wert, wird der Pumpenantrieb erneut gestartet und die Membran 172 gegen die Feder 26 ausgelenkt.

Es ist auch möglich, diesen Vorgang nach Erreichen einer vorgegebenen minimalen Auslenkung der Membran 172, entsprechend einer maximalen Entspannung der Feder 26 z.B. durch das Signal eines Endschalters zu starten, was sich besonders bei rein mechanisch gesteuerten Pumpen anbietet. Die Bestimmung der dosierten Menge an Reduktionsmittel und Fehlererkennung hinsichtlich Undichtigkeiten im System kann auf die gleiche Weise erfolgen, wie anhand des Ausführungsbeispiels nach Figur 1 beschrieben ist.

Falls die Pumpenmembran über Endschalter oder eine andere Art der Huberkennung verfügt, kann das Hubvolumen direkt über die Auslenkung der Membran vorgegeben werden, wodurch entweder eine Redundanz der Dosiermengenbestimmung gegeben ist und somit die Eigendiagnosefähigkeit und der Dosiergenauigkeit dienen kann, oder aber es möglich wird, auf den Drucksensor zu verzichten.

## Patentansprüche

1. Verfahren zur Abgasnachbehandlung für eine mit Luftüberschuß arbeitende Brennkraftmaschine, insbesondere eine Dieselbrennkraftmaschine mittels der selektiven katalytischen Reduktion von Stickoxiden aus dem Abgas,
bei dem Reduktionsmittel aus einem Reduktionsmittelbehälter (10) durch eine Pumpe (11,111) gefördert wird und bei bestimmten Betriebszuständen der Brennkraftmaschine in das Abgas der Brennkraftmaschine stromaufwärts eines SCR-Katalysators (16) mittels einer Dosiereinrichtung (14) zugemessen wird,
**dadurch gekennzeichnet, daß**
- das Reduktionsmittel in einen Druckspeicher (17,13) gefördert wird,
- die zur Abgasnachbehandlung aktuell benötigte Menge an Reduktionsmittel durch Öffnen der Dosiereinrichtung (14) aus dem Druckspeicher (17,13) entnommen wird und
- die Pumpe (11,111) derart angesteuert wird, so daß nur die durch die Dosierung verbrauchte Menge an Reduktionsmittel gefördert wird.

2. Verfahren nach Anspruch 1, **dadurch gekennzeichnet, daß** der Druck im Druckspeicher (17,13) mittels eines Drucksensors (18) erfaßt wird und aus der Druckdifferenz vor und nach der Dosierphase die dosierte Menge an Reduktionsmittel bestimmt wird.

3. Verfahren nach Anspruch 2, **dadurch gekennzeichnet, daß** die dosierte Menge an Reduktionsmittel aus einer Kennlinie abhängig von den gemessenen Druckwerten ermittelt wird.

4. Verfahren nach Anspruch 3, **dadurch gekennzeichnet, daß** die Kennlinie in einem Speicher (23) eines Steuergerätes (19) für die Abgasnachbehandlung abgelegt ist.

5. Verfahren nach Anspruch 1, **dadurch gekennzeichnet, daß** in Dosierpausen, in denen keine Reduktionsmittelzugabe erfolgt, das Dosiersystem auf Dichtigkeit geprüft wird.

6. Verfahren nach Anspruch 5, **dadurch gekennzeichnet, daß** nach Beendigung eines Dosierimpulses der Druck im Druckspeicher (17,13) erfaßt wird und nach Ablauf einer vorgegebenen Zeitspanne überprüft wird, ob der Druck einen vorgegebenen Grenzwert unterschritten hat und bei Unterschreiten des Grenzwertes das Dosiersystem als undicht eingestuft wird.

7. Verfahren nach Anspruch 1, **dadurch gekennzeichnet, daß** der Druck im Druckspeicher (17,13) mittels eines Drucksensors (18) erfaßt wird, und bei Unterschreiten eines unteren Druckschwellenwertes die Pumpe (11;111) eingeschaltet wird und bei Überschreiten eines oberen Druckschwellenwertes wieder ausgeschaltet wird.

8. Verfahren nach Anspruch 7, **dadurch gekennzeichnet, daß** die Ansteuerzeit der Pumpe (11,111), während der der Druck innerhalb der beiden Druckschwellenwerte liegt, gemessen wird und als Kriterium für die Funktion der Pumpe (11,111) herangezogen wird.

9. Verfahren nach Anspruch 7, **dadurch gekennzeichnet, daß** die Lade- und Entladezeit des Druckspeichers (17) gemessen wird und als Kriterium für die ordnungsgemäße Funktion des Druckspeichers (17,13) herangezogen wird.

10. Verfahren nach Anspruch 1, **dadurch gekennzeichnet, daß** als Druckspeicher (13) ein die Pumpe (11) mit der Dosiereinrichtung (14) verbindende flexible Leitung verwendet wird.

11. Vorrrichtung zur Abgasnachbehandlung für eine mit Luftüberschuß arbeitende Brennkraftmaschine, insbesondere eine Dieselbrennkraftmaschine mittels der selektiven katalytischen Reduktion von Stickoxiden aus dem Abgas,
mit einer Pumpe (11,111) zur Förderung von Reduktionsmittel aus einem Reduktionsmittelbehälter (10), einer Dosiereinrichtung (14) zum gezielten Zuführen des Reduktionsmittels in das Abgas der Brennkraftmaschine stromaufwärts eines SCR-Katalysators (16),
**dadurch gekennzeichnet, daß**
zwischen Reduktionsmittelbehälter (10) und Dosiereinrichtung (14) ein zur Zwischenspeicherung von Reduktionsmittel dienender Druckspeicher (17,13) mit einem dem Druckspeicher (17,13) zugeordneten Drucksensor (18) vorgesehen ist und
der Druckspeicher (17,13) als ein, die Druckseite der Pumpe (11) mit der Dosiereinrichtung (14) verbindende, flexible Leitung realisiert ist.

## Claims

1. Method for after-treating exhaust gas from an internal combustion engine operated with excess air, in particular a diesel engine, by means of the selective catalytic reduction of nitrogen oxides from the exhaust gas, in which reducing agent is conveyed from a reducing agent container (10) by a pump (11,111) and at specific operating states of the internal combustion engine is delivered to the exhaust gas from the internal combustion engine upstream of an SCR catalyst (16) by means of a metering device (14), **characterised in that**
- the reducing agent is conveyed to a pressure accumulator (17, 13),
- the amount of reducing agent needed at any one time for the exhaust gas after-treatment is withdrawn from the pressure accumulator (17, 13) by opening the metering device (14), and
- the pump (11, 111) is controlled in such a way that only the amount of reducing agent consumed by the metering is conveyed.

2. Method according to claim 1, **characterised in that** the pressure in the pressure accumulator (17, 13) is recorded by means of a pressure sensor (18) and the metered amount of reducing agent is determined from the pressure difference before and after the metering phase.

3. Method according to claim 2, **characterised in that** the metered amount of reducing agent is determined from a characteristic curve depending on the measured pressure values.

4. Method according to claim 3, **characterised in that** the characteristic curve is stored in a memory (23) of a control unit (19) for the exhaust gas after-treatment.

5. Method according to claim 1, **characterised in that** the metering system is checked for leak tightness during pauses between metering in which no reducing agent is added.

6. Method according to claim 5, **characterised in that** after completion of a metering pulse the pressure in the pressure accumulator (17, 13) is recorded and after a predetermined period of time has elapsed it is checked whether the pressure has fallen below a predetermined limit value and, if the pressure has fallen below the limit value, the metering system is classified as not leak-tight.

7. Method according to claim 1, **characterised in that** the pressure in the pressure accumulator (17, 13) is recorded by means of a pressure sensor (18) and if the value falls below a lower pressure threshold value the pump (11, 111) is switched on, and if the value exceeds an upper pressure threshold value the pump is switched off.

8. Method according to claim 7, **characterised in that** the drive time of the pump (11, 111) during which the pressure lies between the two pressure threshold values is measured and is used as a criterion for the functioning of the pump (11, 111).

9. Method according to claim 7, **characterised in that** the charging time and discharging time of the pressure accumulator (17) is measured and is used as a criterion for the orderly functioning of the pressure accumulator (17, 13).

10. Method according to claim 1, **characterised in that** a flexible line connecting the pump (11) to the metering device (14) is used as pressure accumulator (13).

11. Exhaust gas after-treatment device for an internal combustion engine operating with excess air, in particular a diesel engine, by means of the selective catalytic reduction of nitrogen oxides from the exhaust gas, with a pump (11, 111) for conveying reducing agent from a reducing agent container (10), a metering device (14) for the targeted feeding of the reducing agent to the exhaust gas of the internal combustion engine upstream of an SCR catalyst (16), **characterised in that**
a pressure accumulator (17, 13) serving for the intermediate storage of reducing agent together with a pressure sensor (18) associated with the pressure accumulator (17, 13) is provided between the reducing agent container (10) and metering device (14), and the pressure accumulator (17, 13) is in the form of a flexible line connecting the pressure side of the pump (11) to the metering device (14).

## Revendications

1. Procédé de traitement des gaz d échappement d un moteur à combustion interne fonctionnant avec un excès d air , notamment d un moteur à combustion interne diesel , au moyen de la réduction catalytique sélective d oxydes d azote des gaz d échappement,
dans lequel on véhicule par une pompe (11 , 111) de I agent réducteur provenant d un réservoir (10) d agent réducteur et , pour certains états de fonctionnement du moteur à combustion interne , on I envoie de manière dosée au moyen d un dispositif (14) de dosage dans les gaz d échappement du moteur à combustion interne en amont d un pot catalytique (16) SCR ,
**caractérisé en ce que** ,
- on véhicule I agent réducteur dans un réservoir (17 , 13) sous pression ,
- on prélève la quantité d agent réducteur nécessaire instantanément pour le traitement des gaz d échappement du réservoir (17 , 13) sous pression par ouverture du dispositif (14) de dosage , et
- on commande la pompe (11 , 111) de façon à ne véhiculer que la quantité d agent réducteur consommée par I addition de manière dosée a

2. Procédé suivant la revendication 1 , **caractérisé en ce que** I on relève la pression dans le réservoir (17 , 13) sous pression au moyen d un capteur (18) de pression et on détermine la quantité d agent réducteur ajoutée de manière dosée à partir de la différence de pression avant et après la phase d addition de manière dosée a

3. Procédé suivant la revendication 2 , **caractérisé en ce que** I on détermine la quantité d agent réducteur ajoutée de manière dosée à partir d une courbe caractéristique en fonction des valeurs de pression mesurées a

4. Procédé suivant la revendication 3 , **caractérisé en ce que** I on mémorise la courbe caractéristique dans un mémoire (23) d un appareil (19) de commande du traitement des gaz d échappement a

5. Procédé suivant la revendication 1 , **caractérisé en ce que** l' on contrôle I étanchéité du système de dosage dans des intervalles dans lesquels on n effectue pas d addition d agent réducteur a

6. Procédé suivant la revendication 5 , **caractérisé en ce que** I on détecte , après qu une impulsion de dosage est achevée , la pression dans le réservoir (17 , 13) sous pression et on contrôle , après expiration d un laps de temps donné à I avance , si la pression est devenue inférieure à une valeur limite donnée à I avance et on classe le système de dosage comme n étant pas étanche si on est passé en dessous de la valeur limite a

7. Procédé suivant la revendication 1 , **caractérisé en ce que** I on relève la pression dans le réservoir (17 , 13) sous pression au moyen d un capteur (18) de pression et on branche la pompe (11 , 111) si on passe en dessous d une valeur de seuil inférieure de la pression , tandis que , si on dépasse une valeur de seuil supérieure de la pression , on la rebranche a

8. Procédé suivant la revendication 7 , **caractérisé en ce que** I on mesure la durée de commande de la pompe (11 , 111) pendant que la pression se trouve entre les deux valeurs de seuil de pression et on en tire partie comme critère pour le fonctionnement de la pompe (11 , 111 ) a

9. Procédé suivant la revendication 7 , **caractérisé en ce que** I on mesure la durée de chargement et de déchargement du réservoir (17) sous pression et on en tire partie comme critère pour le bon fonctionnement du réservoir (17 , 13) sous pression a

10. Procédé suivant la revendication 1 , **caractérisé en ce que** I on utilise comme réservoir (13) sous pression un conduit souple mettant la pompe (11) en communication avec le dispositif (14) d addition d agent de manière dosée a

11. Dispositif de traitement des gaz d échappement pour un moteur à combustion interne fonctionnant avec un excès d air , notamment pour un moteur à combustion interne diesel , au moyen de la réduction catalytique sélective d oxydes d azote des gaz d échappement , comprenant une pompe (11 , 111) pour véhiculer de I agent réducteur à partir d un réservoir (10) d agent réducteur , un dispositif (14) d addition dosée pour envoyer comme il convient un agent réducteur dans les gaz d échappement du moteur à combustion interne en amont d un pot catalytique (16) SCR ,
**caractérisé en ce que**
il est prévu , entre le réservoir (10) d agent réducteur et le dispositif (14) d addition de manière dosée , un réservoir (17 , 13) sous pression servant à emmagasiner intermédiairement de I agent réducteur avec un capteur (18) de pression associé au réservoir (17 , 13) sous pression et le réservoir (17 , 13) sous pression est réalisé sous la forme d un conduit souple mettant le côté refoulement de la pompe (11) en communication avec le dispositif (14) d addition de manière dosée a
